# EUROPÄISCHE PATENTANMELDUNG

(11) **EP 3 150 799 A1**
(43) Veröffentlichungstag der Anmeldung: **05.04.2017**
(21) Anmeldenummer: 16191825.5
(22) Anmeldetag: 30.09.2016
(51) Int. Cl.: F01D 5/08, F04D 29/58, F04D 29/32

(54) **STRÖMUNGSLEITVORRICHTUNG UND TURBOMASCHINE MIT MINDESTENS EINER STRÖMUNGSLEITVORRICHTUNG**

(30) Priorität: 01.10.2015 DE 102015219022
(71) Anmelder: Rolls-Royce Deutschland Ltd & Co KG, 15827 Blankenfelde-Mahlow (DE)
(72) Erfinder: ORTMANNS, Jens, 14548 Schwielowsee (DE); WIRTH, Moritz, 12101 Berlin (DE)
(74) Vertreter: Maikowski & Ninnemann Patentanwälte Partnerschaft mbB

(57) **Zusammenfassung**

Die Erfindung betrifft eine Strömungsleitvorrichtung in einer Turbomaschine mit mindestens einem Rotormodul, das auf einer Welle angeordnet ist, wobei das Rotormodul mindestens zwei Rotorscheiben aufweist zwischen denen jeweils eine Rotorkavität angeordnet ist, dadurch gekennzeichnet, dass die Rotorkavitäten (11, 12, 13, 14, 15) durch Öffnungen (21, 22, 23, 24, 25) in den Rotorscheiben (1, 2, 3, 4, 5) für einen Luftstrom (L) luftleitend miteinander verbunden sind und in der in Hauptströmungsrichtung (A) der Turbomaschine (100) gesehen letzten Rotorkavität (15) mindestens eine Drucksenkenvorrichtung (30) zur Erzeugung eines lokalen Unterdrucks angeordnet ist. Ferner betrifft die Erfindung eine Turbomaschine mit einer Strömungsleitvorrichtung.

## Beschreibung

Die Erfindung betrifft eine Strömungsleitvorrichtung mit den Merkmalen des Anspruchs 1 und eine Turbomaschine mit den Merkmalen des Anspruchs 11.

In Turbomaschinen werden Rotormodule, wie Kompressor- oder Turbinenmodule verwendet, die jeweils eine Reihe von Rotorscheiben aufweisen. An den Rotorscheiben sind am radial äußeren Rand Laufschaufeln angeordnet, die in einen Luftkanal ragen, um bei einem Kompressormodul der im Luftkanal strömenden Luft Energie zuzuführen oder bei einem Turbinenmodul der im Luftkanal strömenden Luft Energie zu entnehmen.

Die Rotorscheiben sind radial unterhalb der Laufschaufeln mit einer Welle im Inneren der Turbomaschine gekoppelt, über die die Rotorscheiben angetrieben werden. Dabei ist es z.B. aus der WO 2014 / 133659 A1 oder der US 2007 / 0189890 A1 bekannt, die Zwischenräume zwischen Rotorscheiben unterhalb der Laufschaufeln - die so genannten die Rotorkavitäten - von einem Luftstrom durchströmen zu lassen. Dies erfolgt u.a. zur thermischen Beeinflussung der Rotorscheiben.

Es besteht die Aufgabe, möglichst effiziente Strömungsführungen in den Rotorkavitäten zu schaffen, damit z.B. eine effiziente Kühlung ermöglicht wird.

Die Aufgabe wird durch eine Strömungsleitvorrichtung mit den Merkmalen des Anspruchs 1 gelöst.

In Rotorkavitäten zwischen mindestens zwei Rotorscheiben sind Öffnungen angeordnet, so dass die Rotorkavitäten für einen Luftstrom luftleitend miteinander verbunden sind. In der in Hauptströmungsrichtung der Turbomaschine gesehen letzten Rotorkavität ist mindestens eine Drucksenkenvorrichtung zur Erzeugung eines lokalen Unterdrucks angeordnet. Vorteilhafterweise ist damit der in die Rotorkavitäten eintretende Luftstrom durch die Öffnungen in Richtung der mindestens einen Drucksenkenvorrichtung führbar.

Durch die gezielte Erzeugung eines lokalen Unterdrucks in der letzten Rotorkavität und durch die Öffnungen in den Rotorscheiben kann ein Druckgefälle über die Rotorkavitäten hinweg erzeugt werden. Der Luftstrom durchströmt die Rotorkavitäten von vorne nach hinten und kann dann ggf. in anderen Teilen der Turbomaschine eingesetzt werden.

Mit Vorteil ist das Rotormodul als Verdichtermodul ausgebildet und der Luftstrom ist aus dem Strömungskanal des Verdichtermoduls durch mindestens eine Einlassöffnung in mindestens eine Rotorkavität führbar.

In einer weiteren Ausführungsform weisen die Rotorscheiben jeweils mindestens zwei Öffnungen auf, die achsensymmetrisch zur Welle der Turbomaschine angeordnet sind. Die achsensymmetrische Anordnung sorgt für eine möglichst unwuchtfreie Rotation der der Rotorscheiben.

Da die Öffnungen in den Rotorscheiben eine Materialschwächung der Rotorscheibe darstellen, weisen in einer Ausführungsform die Rotorscheiben im Bereich der Öffnungen jeweils eine Materialverstärkung auf. Diese Materialverstärkung kann z.B. als Ring und / oder Steg ausgebildet sein, die die Öffnungen umgibt.

In einer weiteren Ausführungsform weist die Drucksenkenvorrichtung mindestens einen Wirbelgleichrichter und / oder ein Mittel zur lokalen Erzeugung eines Unterdrucks durch gezielte Beschleunigung des Luftstroms auf. In Wirbelgleichrichtern bildet sich auf Grund der Beeinflussung der Wirbel in den Rotorkavitäten ein relativer Unterdruck aus.

Der Luftstrom ist von der Drucksenkenvorrichtung in einen anderen Teil der Turbomaschine, insbesondere ein Turbinenmodul führbar. Damit kann z.B. vergleichsweise kühle Luft zur Kühlung eingesetzt werden.

In einer Ausführungsform ist die Turbomaschine als Flugzeugtriebwerk ausgebildet.

Die Aufgabe wird auch durch eine Turbomaschinemaschine, insbesondere ein Flugzeugtriebwerk nach Anspruch 11 gelöst.

In Zusammenhang mit den in den Figuren dargestellten Ausführungsbeispielen wird die Erfindung erläutert. Dabei zeigt
- Fig. 1: eine schematische Darstellung eines Axialverdichters mit einer Ausführungsform einer Strömungsleitvorrichtung in einem zweiwelligen Flugzeugtriebwerk;
- Fig. 2: eine vergrößerte Darstellung der Rotorkavitäten und der Strömungsleitvorrichtung in einem Kompressormodul der in Fig. 1 dargestellten Ausführungsform;
- Fig. 3A, B, C: drei Ausführungsformen für eine Rotorscheibe.

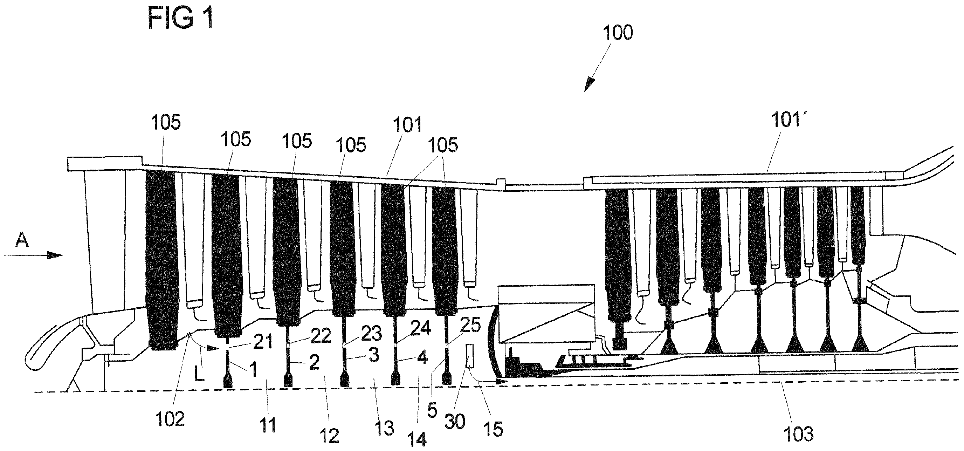

In Fig. 1 ist eine Ausführungsform einer Strömungsleitvorrichtung in Zusammenhang mit einem Rotormodul einer Turbomaschine, nämlich einem Flugzeugtriebwerk 100 dargestellt. Das Rotormodul weist einen zweiwelligen Axialverdichter mit zwei Kompressormodulen 101, 101' ` auf. Aus Gründen der Übersichtlichkeit wird die Strömungsleitvorrichtung nur im Zusammenhang mit dem ersten Kompressormodul 101 dargestellt.

Das Flugzeugtriebwerk 100 wird von Luft in einer Hauptströmungsrichtung A durchströmt, die parallel zur Welle 103 des Flugzeugtriebwerkes 100 angeordnet ist. Im ersten Kompressormodul 101 sind sechs Stufen, jeweils bestehend aus einem Stator und einem Rotor (in Fig. 1 schwarz eingezeichnet). Die Rotoren weisen dabei Laufschaufeln 105 auf, die in den Verdichterkanal 106 ragen. Die Laufschaufeln 105 sind am radialen Ende von Rotorscheiben 1, 2, 3, 4, 5 angeordnet. Die Rotorscheiben 1, 2, 3, 4, 5 sind dabei jeweils mit der Welle 103 des Flugzeugtriebwerks 100 verbunden.

Radial unterhalb der Laufschaufeln 105 und zwischen den Rotorscheiben 1, 2, 3, 4 befinden sich vier Rotorkavitäten 11, 12, 13, 14. Hinter der vierten Rotorscheibe 4 ist die letzte Rotorkavität 15 angeordnet. Zusammen nehmen die Rotorkavitäten einen relativ großen Raum um die Welle 103 herum ein, der von einer Luftströmung L durchströmt wird. Die Luftströmung L tritt durch eine Einlassöffnung 102 aus einer Verdichterstufe in den Raum der Rotorkavitäten 11, 12, 13, 14, 15 ein. Die Luft weist dabei den Druck, die Dichte und die Temperatur auf, die an der Einlassöffnung 102 herrschen.

Um eine verbesserte Durchströmung der einzelnen Rotorkavitäten 11, 12, 13, 14, 15 zu ermöglichen weisen die Rotorscheiben 1, 2, 3, 4, 5 jeweils Öffnungen 21, 23, 23, 24, 25 auf, durch die die Luftströmung L in axialer Richtung durch die Rotorscheiben 1, 2, 3, 4 nach hinten strömen kann. Aus Gründen der Übersichtlichkeit ist in Fig. 1 nur jeweils eine Öffnung 21, 22, 23, 24, 25 dargestellt.

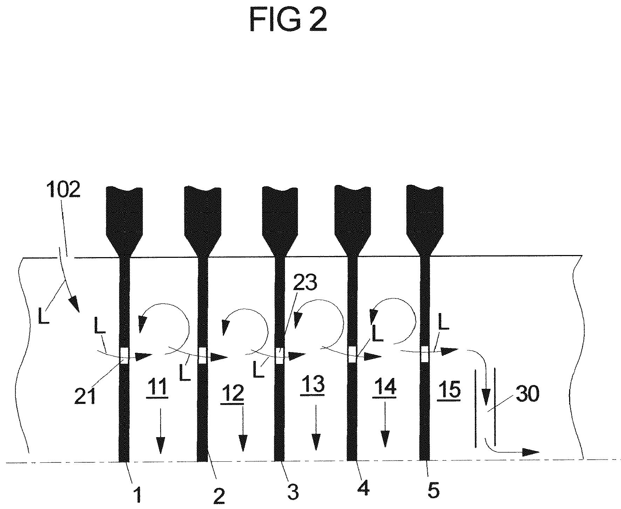

In der Fig. 2 sind die Rotorkavitäten 11, 12, 13, 14, 15 und die Strömungsführung im Detail dargestellt.

Für eine effiziente Durchströmung der Rotorkavitäten 11, 12, 13, 14, 15 in axialer Richtung ist in der in Hauptströmungsrichtung A gesehen letzten Rotorkavität 15 eine Drucksenkenvorrichtung 30 angeordnet. Diese erzeugt - in noch zu beschreibender Weise - lokal in der letzten Rotorkavität 15 einen Unterdruck. Dieser Unterdruck führt dazu, dass dem komplexen Strömungsfeld in den Rotorkavitäten 11, 12, 13, 14, 15 ein Druckgradient überlagert wird, der für eine Gesamtströmung von der Einlassöffnung 102 zur Drucksenkenvorrichtung 30 sorgt. Damit liegt eine Luftströmung L vor, die sich durch alle Rotorkavitäten 11, 12, 13, 14, 15 erstreckt, wobei die Strömung durch die Öffnungen 21, 22, 23, 24, 25 in den Rotorscheiben 1, 2, 3, 4, 5, fließen kann. Die Strömungsverhältnisse in jeder Rotorkavität 11, 12, 13, 14, 15 sind komplex, da dieser axialen Strömung auch - auf Grund der Rotation der Welle und der Rotorscheiben 1, 2, 3, 4, 5 - radiale Strömungsanteile überlagert sind.

Somit weist die Strömungsleitvorrichtung Rotorscheiben 1, 2, 3, 4, 5 mit Öffnungen 21, 22, 23, 24, 25 für die luftleitende Verbindung der Rotorkavitäten 11, 12, 13, 14, 15 untereinander auf, wobei diese Luftströmung L durch die Drucksenkenvorrichtung 30 in der letzten Rotorkavität 15 angelegte Potential (d.h. den lokalen Unterdruck) hervorgerufen wird.

Die Kombination dieser Mittel erlaubt einen besseren Luftaustauch und eine bessere Durchspülung in den Rotorkavitäten 11, 12, 13, 14, 15 in axialer Richtung, was ein besseres thermisches Management des Flugzeugtriebwerks 100 ermöglicht. Damit können Rotorspalten, d.h. die Spalte zwischen den Laufschaufelspitzen und dem umgebenden Gehäuse, minimiert werden.

Die Rotorscheiben 1, 2, 3, 4, 5 drehen sich im Betrieb teilweise mit sehr hoher Geschwindigkeit, so dass in den Rotorkavitäten 11, 12, 13, 14, 15 bedingt durch die Radialbeschleunigung komplexe Strömungsmuster der Luftströmung L auftreten. Da in der axial letzten Rotorkavität 15 eine Drucksenkenvorrichtung 30 angeordnet ist, wird diesem Strömungsmuster eine axiale Strömung überlagert.

Die Drucksenkenvorrichtung 30 ist hier als Wirbelgleichrichter (auch als Vortex Reducer bezeichnet) ausgebildet. Der Wirbelgleichrichter 30 weist dabei ein in radialer Richtung ausgerichtetes, gerades Rohr auf, in dem die radiale Strömung innerhalb der letzten Rotorkavität 15 geführt wird. Über die Länge der Wirbelgleichrichter 30 besteht ein Druckgefälle in radialer Richtung nach innen, d.h. Luft wird aus den Rotorkavitäten 11, 12, 13, 14, 15 in Richtung Nabe gesaugt. Die Wirbelgleichrichter 30 beeinflussen die Ausbildung der Wirbel in den Rotorkavitäten 11, 12, 13, 14, 15, wobei vor allem die Nicht-Achsensymmetrie eine Rolle spielt. In alternativen Ausführungsformen können auch andere nicht-achsensymmetrische Mittel als Drucksenkenvorrichtung 30 dienen, wie z.B. Leitbleche (Paddles) am unteren Ende der Rotorkavitäten 11, 12, 13, 14, 15 oder Flansche (Schraubenköpfe). Auch der Einsatz gezielt rauer Oberfläche (z.B. durch radial verlaufende Fräsmarken, lokale durch Spritzen aufgebrachte radiale Streifen in der Art von Transition-Strips auf Schaufeln) zur Erhöhung der Dicke der Strömungsrandschicht kann diesen Effekt haben. Damit kann der niedrige Druck in den Rotorkavitäten 11, 12, 13, 14, 15 gezielt aufgeprägt werden, was zu einer besseren Belüftung der Rotorkavitäten 11, 12, 13, 14, 15 führt.

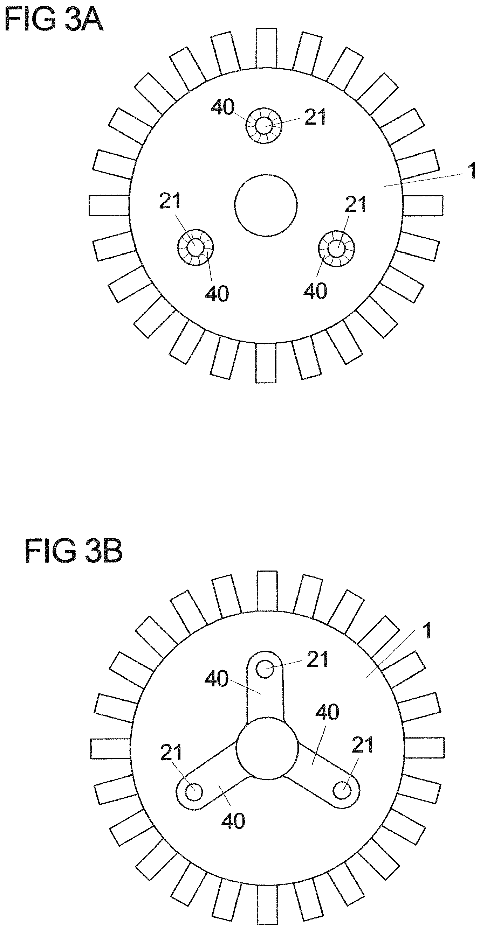

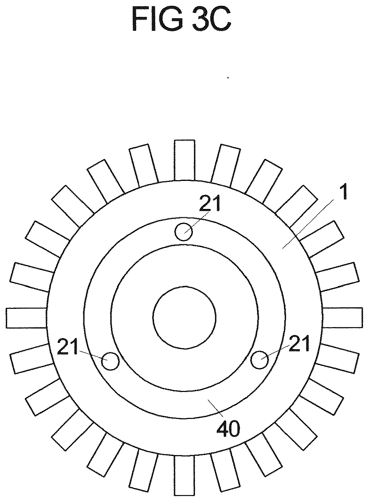

In den Fig. 3A, 3B und 3C sind drei Ausführungsform einer Rotorscheibe 1 in einer Draufsicht dargestellt, bei denen drei Öffnungen 21 jeweils um 120° versetzt angeordnet sind. Da die Öffnungen 21 grundsätzlich eine Materialschwächung in der Rotorscheibe 1 darstellen, kann es sinnvoll sein, diese Bereiche gezielt zu verstärken.

In der Fig. 3A ist eine Ausführungsform dargestellt, bei der in der direkten Umgebung der Öffnungen 21 das Material in Form einer Materialverstärkung 40 etwas starker ausgebildet ist. In Fig. 3B erfolgt die Materialverstärkung 40 in Form von radial angeordneten Rippen.

In Fig. 3C ist die Materialverstärkung 40 ringförmig ausgebildet, um die verstärkte auftretenden Umfangsspannungen zu kompensieren.

Im Übrigen können Strömungsleitvorrichtungen der hier beschriebenen Art zusätzlich oder alternativ auch im Zusammenhang mit Turbinenmodulen verwendet werden.

Auch sind die Ausführungsformen der Strömungsleitvorrichtungen im Zusammenhang mit einem Flugzeugtriebwerk beschrieben worden. Grundsätzlich ist es auch möglich, die Strömungsleitvorrichtung in einer anderen Turbomaschine, z.B. einer stationären Gasturbine zu verwenden.

### Bezugszeichenliste

- 1: erste Rotorscheibe
- 2: zweite Rotorscheibe
- 3: dritte Rotorscheibe
- 4: vierte Rotorscheibe
- 5: fünfte Rotorscheibe
- 11: erste Rotorkavität
- 12: zweite Rotorkavität
- 13: dritte Rotorkavität
- 14: vierte Rotorkavität
- 15: letzte Rotorkavität

- 21: erste Öffnung
- 22: zweite Öffnung
- 23: dritte Öffnung
- 24: vierte Öffnung
- 25: fünfte Öffnung

- 30: Drucksenkenvorrichtung
- 31: Vorrichtung zum Umlenken einer radialen Strömung

- 40: Materialverstärkung

- 100: Turbomaschine
- 101: Verdichtermodul
- 102: Einlassöffnung
- 103: Welle
- 104: Turbinenmodul

- A: Hauptströmungsvorrichtung
- L: Luftströmung in Rotorkavitäten

## Patentansprüche

1. Strömungsleitvorrichtung in einer Turbomaschine mit mindestens einem Rotormodul, das auf einer Welle angeordnet ist, wobei das Rotormodul mindestens zwei Rotorscheiben aufweist zwischen denen jeweils eine Rotorkavität angeordnet ist,
**dadurch gekennzeichnet, dass**
die Rotorkavitäten (11, 12, 13, 14, 15) durch Öffnungen (21, 22, 23, 24, 25) in den Rotorscheiben (1, 2, 3, 4, 5) für einen Luftstrom (L) luftleitend miteinander verbunden sind und in der in Hauptströmungsrichtung (A) der Turbomaschine (100) gesehen letzten Rotorkavität (15) mindestens eine Drucksenkenvorrichtung (30) zur Erzeugung eines lokalen Unterdrucks angeordnet ist.

2. Strömungsleitvorrichtung nach Anspruch 1, **dadurch gekennzeichnet, dass** der in die Rotorkavitäten (11, 12, 13, 14, 15) eintretende Luftstrom (L) durch die Öffnungen (21, 22, 23, 24, 25) in Richtung der mindestens einen Drucksenkenvorrichtung (30) führbar ist.

3. Strömungsleitvorrichtung nach Anspruch 1 oder 2, **dadurch gekennzeichnet, dass** das Rotormodul als Verdichtermodul (101) ausgebildet ist und der Luftstrom (L) aus dem Strömungskanal des Verdichtermoduls (101) durch mindestens eine Einlassöffnung (102) in mindestens eine Rotorkavität (11, 12, 13, 14, 15) führbar ist.

4. Strömungsleitvorrichtung nach mindestens einem der vorhergehenden Ansprüche, **dadurch gekennzeichnet, dass** die Rotorscheiben (1, 2, 3, 4) jeweils mindestens zwei Öffnungen (21, 22, 23, 23) aufweisen, die achsensymmetrisch zur Welle (103) der Turbomaschine (100) angeordnet sind.

5. Strömungsleitvorrichtung nach mindestens einem der vorhergehenden Ansprüche, **dadurch gekennzeichnet, dass** die Rotorscheiben (1, 2, 3, 4, 5) im Bereich der Öffnungen (21, 22, 23, 24, 25) jeweils eine Materialverstärkung (40) aufweisen.

6. Strömungsleitvorrichtung nach Anspruch 5, **dadurch gekennzeichnet, dass** die Materialverstärkung als Ring und / oder Steg ausgebildet ist, die die Öffnungen (21, 22, 23, 23, 25) umgibt.

7. Strömungsleitvorrichtung nach mindestens einem der vorhergehenden Ansprüche, **dadurch gekennzeichnet, dass** die Drucksenkenvorrichtung (30) mindestens Wirbelgleichrichter und / oder ein Mittel zur lokalen Erzeugung eines Unterdrucks durch gezielte Beschleunigung des Luftstroms (L) aufweist.

8. Strömungsleitvorrichtung nach mindestens einem der vorhergehenden Ansprüche, **dadurch gekennzeichnet, dass** der Luftstrom (L) von der Drucksenkenvorrichtung (30) aus in einen anderen Teil der Turbomaschine (100), insbesondere ein Turbinenmodul (104) führbar ist.

9. Strömungsleitvorrichtung nach mindestens einem der vorhergehenden Ansprüche, **dadurch gekennzeichnet, dass** in mindestens einer Rotorkavität (11, 12, 13, 14, 15) eine Vorrichtung (31) zum Umlenken einer radialen Luftströmung (R) in der mindestens einen Rotorkavität (11, 12, 13, 14, 15) angeordnet ist, wobei die umgelenkte Luft axial in Richtung der Drucksenkenvorrichtung (30) führbar ist.

10. Strömungsleitvorrichtung nach mindestens einem der vorhergehenden Ansprüche, **dadurch gekennzeichnet, dass** die Turbomaschine (100) als Flugzeugtriebwerk ausgebildet ist.

11. Turbomaschine, insbesondere ein Flugzeugtriebwerk mit mindestens einer Strömungsleitvorrichtung nach mindestens einem der Ansprüche 1 bis 10.
